# FASCICULE DE BREVET EUROPEEN

(11) **EP 3 504 481 B1**
(45) Date de publication et mention de la délivrance du brevet: **15.12.2021**
(21) Numéro de dépôt: 17735604.5
(22) Date de dépôt: 11.07.2017
(51) Int. Cl.: F23R 3/02

(54) **CHAMBRE DE COMBUSTION AVEC UN DÉFLECTEUR D'AIR COMPRIMÉ CHAUD, NOTAMMENT POUR UNE TURBINE DESTINÉE À LA PRODUCTION D'ÉNERGIE, NOTAMMENT D'ÉNERGIE ÉLECTRIQUE**
BRENNKAMMER MIT EINEM DEFLEKTOR FÜR VERDICHTETE HEISSLUFT, INSBESONDERE FÜR EINE TURBINE ZUR ERZEUGUNG VON ENERGIE, INSBESONDERE VON ELEKTRISCHER ENERGIE
COMBUSTION CHAMBER WITH A HOT COMPRESSED AIR DEFLECTOR, IN PARTICULAR FOR A TURBINE INTENDED FOR PRODUCING ENERGY, IN PARTICULAR ELECTRICAL ENERGY

(30) Priorité: 29.08.2016 FR 1657991
(43) Date de publication de la demande: 03.07.2019
(73) Titulaire: IFP Energies nouvelles, 92852 Rueil-Malmaison (FR)
(72) Inventeur: BAYA TODA, Hubert, 75019 Paris (FR); MICHEL, Jean-Baptiste, 92500 Rueil Malmaison (FR); VALIN, Thomas, 94300 Vincennes (FR); THIRIOT, Julien, 92500 Rueil Malmaison (FR)
(74) Mandataire: IFP Energies nouvelles
(86) Numéro de dépôt international: PCT/EP2017/067434
(87) Numéro de publication internationale: WO 2018/041455

(56) Documents cités:
- FR-A- 1 503 456
- US-A- 4 085 579
- US-A1- 2014 345 249

## Description

La présente invention se rapporte à une chambre de combustion d'une turbine, notamment d'une turbine à cycle thermodynamique avec récupérateur, pour la production d'énergie, notamment d'énergie électrique.

Elle concerne plus particulièrement une microturbine avec récupérateur pour la production d'électricité à partir d'un combustible liquide ou gazeux.

Généralement, il est entendu par microturbine une turbine de petite puissance usuellement inférieure à 200KW.

Comme mieux décrit dans la demande WO 2012/039611, une turbine avec récupérateur comprend généralement au moins un étage de compression avec au moins un compresseur, une chambre de combustion (ou brûleur), au moins un étage de détente avec au moins une turbine de détente, un dispositif d'échange de chaleur (ou récupérateur) entre le compresseur et la chambre de combustion permettant de chauffer les gaz comprimés par le compresseur pour les envoyer avec une température élevée à la chambre de combustion, ce dispositif d'échange étant parcouru par les gaz chauds provenant de la turbine.

Les demandes de brevets FR 1 503 456 A, US 2014/345 249 A1 et US 4 085 579 concernent également des turbines à gaz. La forme en deux parties de la revendication 1 est basée sur US 4 085 579.

Tel que cela est décrit dans la demande de brevet français N° 15/59314 du demandeur, la chambre de combustion comprend un boîtier au travers duquel circule l'air comprimé chaud provenant du récupérateur et un tube à flamme, situé à l'intérieur de ce boîtier, au sein duquel a lieu la combustion.

Le tube à flamme comprend une zone primaire qui reçoit une partie du débit d'air comprimé chaud total et dans laquelle se produit la combustion et une zone de dilution où a lieu le mélange entre les gaz brûlés issus de la zone primaire et des gaz comprimés chauds provenant de trous de dilution prévus sur le tube.

La zone primaire comprend en outre un diffuseur perforé permettant le passage de l'air comprimé chaud ainsi que du combustible provenant d'un système d'injection de combustible (liquide ou gazeux) placé en amont du diffuseur.

La zone primaire comprend en outre un diffuseur perforé permettant le passage de l'air comprimé chaud ainsi que du combustible provenant d'un système d'injection de combustible (liquide ou gazeux) placé en amont du diffuseur.

Comme mieux décrit dans la demande précitée, le tube à flamme porte un stabilisateur de flamme comprenant le diffuseur perforé, au moins un passage de recirculation de gaz de combustion et un tube de mélange.

Cette chambre de combustion, bien que donnant satisfaction présente néanmoins des inconvénients non négligeables.

En effet, l'air comprimé est distribué dans cette chambre de combustion en deux flux. Le premier flux d'air est dirigé vers la zone primaire où a lieu la combustion alors que le deuxième flux va entrer directement dans la zone de dilution via les trous de dilution pour obtenir, en sortie de la chambre de combustion, un mélange homogène en température et composition.

De ce fait, l'asymétrie de l'entrée d'air comprimé dans la chambre de combustion par rapport au tube à flamme conduit à une asymétrie importante de l'écoulement d'air et de gaz brûlés. Ceci peut conduire à un léchage de la paroi par des gaz chauds issus de la combustion du carburant dans la zone primaire. Ces gaz pouvant avoir des températures très élevées (plus de 1500°C) peuvent endommager la paroi du tube à flamme.

Ceci entraîne une forte limitation de la durée de vie du tube à flamme, sauf à le réaliser dans des matériaux très onéreux.

De plus, si la flamme n'est pas correctement située dans le tube à flamme, l'efficacité de la zone de dilution est amoindrie et peut conduire à des hétérogénéités de température importantes en sortie de la chambre de combustion, ce qui pourrait réduire la durée de vie de la turbine.

En outre, il peut se produire des combustions incomplètes avec des risques d'extinction et de production de polluants.

La présente invention se propose de remédier aux inconvénients précités avec une chambre de combustion présentant une amélioration de la localisation des zones chaudes en permettant une meilleure durabilité des pièces ainsi qu'une meilleure homogénéité de la température en sortie de la chambre de combustion et une conception à moindre coût.

A cet effet, la présente invention concerne une chambre de combustion d'une turbine, notamment d'une turbine à cycle thermodynamique avec récupérateur, pour la production d'énergie, en particulier d'énergie électrique, selon la revendication 1.

Le déflecteur d'air peut comprendre un tube placé entre le boîtier et le tube à flamme.

Le tube peut comporter une portion tubulaire de fixation et une portion tubulaire de dérivation de l'air, de section différente, reliées entre elles par une portion de jonction.

La portion tubulaire de fixation peut comporter un diamètre sensiblement égal au diamètre du boîtier et la portion tubulaire de dérivation peut avoir un diamètre qui est plus grand que le diamètre du tube à flamme et plus petit que celui du diamètre du boîtier.

La portion tubulaire de dérivation peut avoir un diamètre qui est sensiblement la moyenne des diamètres du boîtier et du tube à flamme.

La chambre de combustion peut comprendre un passage circulation d'air entre la portion de dérivation et le boîtier et un autre passage de circulation d'air entre ladite portion de dérivation et le tube à flamme, les deux passages étant reliés par un passage de liaison.

La hauteur radiale des passages de circulation peut être identique.

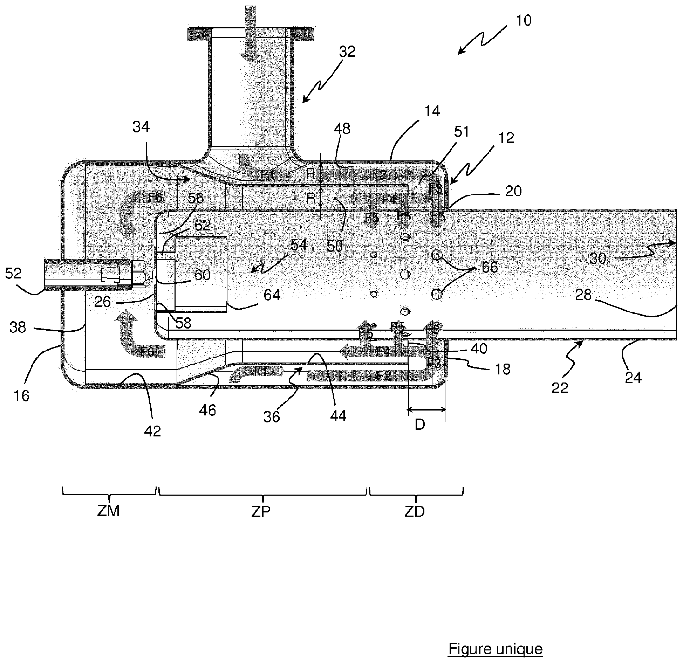

Les autres caractéristiques et avantages de l'invention vont apparaître maintenant à la lecture de la description qui va suivre, donnée à titre uniquement illustratif et non limitatif, et à laquelle est annexée la figure unique qui est un schéma illustrant une chambre de combustion selon l'invention pour une turbine pour la production d'énergie, notamment d'énergie électrique.

La chambre de combustion 10 illustrée sur la figure comprend un boîtier 12 de forme cylindrique avec une paroi tubulaire 14 de section sensiblement circulaire. Ce boîtier est fermé à l'une de ses extrémités par une cloison porte-injecteur 16 et à l'autre de ses extrémités par une cloison annulaire 18 avec une ouverture 20 sensiblement circulaire.

Cette chambre de combustion comprend également un tube à flamme 22, également de forme sensiblement cylindrique, logé coaxialement dans le boîtier en étant de diamètre inférieur au boîtier mais de diamètre identique à celui de l'ouverture 20 de la cloison annulaire. Ce tube comprend une paroi 24 de section sensiblement circulaire, une extrémité fermée par une cloison de diffusion 26 en regard et à distance de la cloison porte-injecteur 16, et une extrémité ouverte 28 qui traverse la cloison annulaire en coopérant à étanchéité avec le diamètre intérieur de cette cloison annulaire pour former la sortie 30 de cette chambre de combustion.

Le boîtier porte sur sa paroi périphérique 14, sensiblement à égale distance entre la cloison porte-injecteur et la cloison annulaire, une admission d'air comprimé chaud 32.

Comme mieux visible sur la figure, un déflecteur d'air 34 est placé entre les deux parois 14 et 24 et en regard de cette admission d'air pour faire circuler cet air chaud dans un seul sens axial à partir de cette admission.

Plus particulièrement, ce déflecteur comporte un tube 36 ouvert à chacune de ses extrémités 38, 40. Ce tube comporte une portion tubulaire de fixation 42 et une portion tubulaire de dérivation de l'air 44, de section différente, reliées entre elles par une portion de jonction 46, ici de forme tronconique.

La section de la portion tubulaire de plus grande section 42, qui correspond à la portion tubulaire de fixation, a un diamètre extérieur sensiblement égal à celui du diamètre intérieur du boîtier 12 alors que la section de la portion tubulaire de plus petite section 44, qui correspond à la portion tubulaire de dérivation de l'air, a un diamètre extérieur qui est plus grand que le diamètre extérieur de la paroi 24 du tube à flamme 22 et plus petit que celui du diamètre intérieur de la paroi 14 du boîtier 12.

Ce déflecteur est logé dans le chambre de combustion d'une manière telle que la portion tubulaire de fixation 42 soit logée entre la cloison porte-injecteur 16 et la cloison de diffusion 26 en étant fixée par tous moyens connus (brasage, soudage,..) à la paroi du boîtier, que la portion tubulaire de dérivation de l'air 44 se trouve sensiblement en regard de l'admission d'air 32 et que la portion tronconique 46 soit placée à proximité de cette admission.

Avantageusement, le diamètre de la portion tubulaire de dérivation de l'air est tel qu'il équivaut à la moyenne des diamètres du boîtier 12 et du tube à flamme 22. Ceci permet de créer des passages de circulation de l'air comprimé de même hauteur radiale R entre cette portion et respectivement le boîtier (passage 48) et le tube à flamme (passage 50).

De même, l'extrémité ouverte 40 de la portion tubulaire de dérivation de l'air 44 est située à distance de la cloison annulaire 18 de manière à ce que la distance entre cette extrémité ouverte et la cloison créée un passage de liaison 51 dont la dimension axiale D est au moins égale à la hauteur radiale R.

Ainsi, lors de l'admission de l'air chaud comprimé, ce dernier circule dans des passages sans variation dimensionnelle importante.

Sur la figure, la cloison porte-injecteur porte un moyen d'injection d'au moins un combustible 52, ici sous la forme d'un injecteur coaxial au tube à flamme, en regard d'un stabilisateur de flamme 54 qui est placé sur la cloison de diffusion 26.

Ce stabilisateur comprend un diffuseur perforé 56 logée dans la cloison de diffusion 26 et comportant une multiplicité de trous axiaux 58 régulièrement réparties circonférentiellement sur la semelle et un orifice axial central 60. Cette semelle se poursuit dans une direction axiale et à l'opposé de la cloison par des bras axiaux 62, ici trois bras disposés à 120° les uns des autres, et portant à leurs extrémités un tube mélangeur 64 d'étendue axiale limitée et de diamètre extérieur inférieur au diamètre intérieur du tube à flamme 22.

Le tube à flamme comprend également des rangées circonférentielles d'orifices de dilution radiaux 66 placés à distance de la cloison de diffusion et à proximité de la cloison annulaire du boîtier en étant reparties régulièrement avantageusement de part et d'autre de la région d'extrémité libre de la portion 44.

La chambre de combustion ainsi constituée comprend une zone d'injection/mélange ZM où se réalise le mélange de l'air comprimé chaud avec le combustible et le début de la combustion, une zone primaire ZP dans laquelle se produit la combustion, et un zone de dilution ZD où a lieu le mélange entre les gaz brûlés issus de la zone primaire et l'air comprimé chaud provenant des trous de dilution.

En fonctionnement, le combustible, ici sous forme liquide, est injecté par l'injecteur 52 en direction de la cloison de diffusion 26 pour traverser l'orifice central 60. L'air comprimé chaud provenant de l'admission 32 est dévié par le déflecteur 34 selon la flèche F1 en premier lieu par la portion tronconique 46 pour aboutir dans le passage 48. Cet air circule dans un sens axial à partir de l'admission 32 et tout au long de ce passage 48 selon un seul sens de circulation, ici de la gauche vers la droite en considérant la flèche F2 pour arriver au passage d'extrémité 51. Arrivé à ce passage, l'air a un sens de circulation radiale selon la flèche F3 puis circule dans le passage 50, dans un sens axial opposé à celui du passage 48 selon la flèche F4. Une partie de l'air circulant dans le passage 50 pénètre alors dans le tube à flamme au travers des orifices de dilution (flèche F5) et l'autre partie cet air arrive dans la zone de mélange ZM (flèche F6). Cet air traverse ensuite les trous 58 de la cloison de diffusion 26 et est dirigé dans le tube mélangeur 64 dans lequel a lieu l'évaporation du combustible liquide, puis la combustion.

Grâce au déflecteur, l'écoulement de l'air issu de l'admission est dirigé vers le côté opposé à la zone de mélange avant de revenir vers cette zone de mélange en entourant la portion tubulaire de dérivation de l'air 44.

Ce faisant :
- les vitesses d'arrivée de l'air dans l'espace situé dans la portion tubulaire de dérivation de l'air 44 sont faibles et plus symétriques (symétrie de révolution) par rapport à l'axe central de la portion tubulaire de dérivation de l'air, ce qui permet une amélioration de l'efficacité de la dilution. En effet, dans chacune des différentes rangées de trous de dilution 66, les vitesses d'entrée de l'air dans la zone de dilution sont proches pour tous les trous ;
- la portion tubulaire de dérivation de l'air 44, qui est la pièce la plus chaude, est mieux isolée de l'extérieur par le double flux d'air ;
- les vitesses d'arrivée dans la zone située entre cloison de diffusion 26 et le boîtier 12 sont très faibles de par la grande section de la zone de mélange ZM et le débit relativement faible (une partie du débit total part dans la zone de diffusion ZD). Cette zone se comporte comme un collecteur permettant d'avoir des vitesses d'entrée dans la zone principale ZP via la cloison de diffusion qui sont normales à la cloison et qui sont identiques pour chaque rangée concentrique de trous. En cela, la flamme générée ensuite dans la zone primaire ZP se situe bien autour de l'axe de la portion tubulaire de dérivation de l'air.

## Revendications

1. Chambre de combustion (10) d'une turbine, notamment d'une turbine à cycle thermodynamique avec récupérateur, pour la production d'énergie, en particulier d'énergie électrique, comportant un boîtier (12) avec un moyen d'injection (52) d'au moins un combustible et une admission (32) d'air comprimé chaud, ledit boîtier logeant un tube à flamme (22) avec un diffuseur perforé (26) pour le passage de l'air comprimé chaud et du carburant, et un stabilisateur de flamme (54), le tube à flamme (22) étant fermé à une extrémité par une cloison de diffusion (26), la chambre comprenant un déflecteur d'air (34) disposé en regard de l'admission d'air chaud comprimé (32) pour faire circuler cet air chaud dans un seul sens axial à partir de cette admission, **caractérisée en ce que** le stabilisateur de flamme (54) comprend le diffuseur perforé (56) logé dans la cloison de diffusion (26) et comportant une multiplicité de trous axiaux (58) régulièrement répartis circonférentiellement sur une semelle et un orifice axial central (60) à travers lequel le moyen d'injection (52) injecte le combustible, le moyen d'injection (52) étant en regard du stabilisateur de flamme (54), la semelle se poursuivant dans la direction axiale et à l'opposé de la cloison de diffusion par des bras axiaux (62) et portant à leurs extrémités un tube mélangeur (64) d'étendue axiale limitée et de diamètre extérieur inférieur au diamètre intérieur du tube à flamme (22).

2. Chambre de combustion selon la revendication 1, **caractérisée en ce que** le déflecteur d'air (34) comprend un tube (36) placé entre le boîtier (12) et le tube à flamme (22).

3. Chambre de combustion selon la revendication 2, **caractérisée en ce que** le tube (36) comporte une portion tubulaire de fixation (42) et une portion tubulaire de dérivation de l'air (44), de section différente, reliées entre elles par une portion de jonction (46).

4. Chambre de combustion selon la revendication 3, **caractérisée en ce que** la portion tubulaire de fixation (42) comporte un diamètre sensiblement égal au diamètre du boîtier (12) et **en ce que** la portion tubulaire de dérivation (44) a un diamètre qui est plus grand que le diamètre du tube à flamme (22) et plus petit que celui du diamètre du boîtier (12).

5. Chambre de combustion selon la revendication 3 ou 4, **caractérisée en ce que** la portion tubulaire de dérivation (44) a un diamètre qui est sensiblement la moyenne des diamètres du boîtier (12) et du tube à flamme (22).

6. Chambre de combustion selon l'une des revendications précédentes, **caractérisée en ce qu'**elle comprend un passage circulation d'air (48) entre la portion de dérivation (44) et le boîtier (12) et un autre passage de circulation d'air (50) entre ladite portion de dérivation et le tube à flamme, les deux passages étant relié par un passage de liaison (51).

7. Chambre de combustion selon la revendication précédente, **caractérisée en ce que** la hauteur radiale des passages de circulation (48, 50) est identique.

8. Turbine, notamment d'une turbine à cycle thermodynamique avec récupérateur, pour la production d'énergie, en particulier d'énergie électrique, comprenant au moins un étage de compression avec au moins un compresseur de gaz, un échangeur de chaleur, une chambre de combustion, et au moins un étage de détente avec au moins une turbine de détente reliée par un arbre au compresseur, **caractérisée en ce qu'**elle comprend une chambre de combustion (10) selon l'une des revendications précédentes.

## Patentansprüche

1. Brennkammer (10) einer Turbine, im Besonderen einer Turbine mit thermodynamischem Zyklus und einem Rekuperator, für die Erzeugung von Energie, insbesondere von elektrischer Energie, die ein Gehäuse (12) mit einem Mittel zum Einspritzen (52) mindestens eines Brennstoffs und einem Einlass (32) für verdichtete Heißluft umfasst, wobei das Gehäuse ein Flammrohr (22) mit einem perforierten Verteiler (26) für den Durchgang der verdichteten Heißluft und des Treibstoffs und einen Flammenhalter (54) enthält, wobei das Flammrohr (22) an einem Ende durch eine Verteilerwand (26) verschlossen ist, wobei die Kammer einen Luftdeflektor (34) beinhaltet, der gegenüber dem Einlass für verdichtete Heißluft (32) angeordnet ist, um diese Heißluft von diesem Einlass aus in einer einzigen axialen Richtung zirkulieren zu lassen, **dadurch gekennzeichnet, dass** der Flammenhalter (54) den perforierten Verteiler (56) beinhaltet, der sich in der Verteilerwand (26) befindet und der eine Vielzahl von axialen Löchern (58), die auf einer Platte regelmäßig über den Umfang verteilt sind, und eine mittige axiale Öffnung (60), durch die das Einspritzmittel (52) den Brennstoff einspritzt, umfasst, wobei sich das Einspritzmittel (52) gegenüber dem Flammenhalter (54) befindet, wobei sich die Platte in axialer Richtung und gegenüber der Verteilerwand durch axiale Arme (62) fortsetzt, die an ihren Enden ein Mischrohr (64) tragen, dessen axiale Ausdehnung begrenzt ist und dessen Außendurchmesser kleiner als der Innendurchmesser des Flammrohrs (22) ist.

2. Brennkammer nach Anspruch 1, **dadurch gekennzeichnet, dass** der Luftdeflektor (34) ein Rohr (36) beinhaltet, das zwischen dem Gehäuse (12) und dem Flammrohr (22) eingefügt ist.

3. Brennkammer nach Anspruch 2, **dadurch gekennzeichnet, dass** das Rohr (36) einen rohrförmigen Befestigungsabschnitt (42) und einen rohrförmigen Luftumleitungsabschnitt (44) mit unterschiedlichem Querschnitt umfasst, die untereinander durch einen Vereinigungsabschnitt (46) verbunden sind.

4. Brennkammer nach Anspruch 3, **dadurch gekennzeichnet, dass** der rohrförmige Befestigungsabschnitt (42) einen Durchmesser umfasst, der im Wesentlichen gleich dem Durchmesser des Gehäuses (12) ist, und dass der rohrförmige Umleitungsabschnitt (44) einen Durchmesser aufweist, der größer als der Durchmesser des Flammrohrs (22) und kleiner als derjenige des Durchmessers des Gehäuses (12) ist.

5. Brennkammer nach Anspruch 3 oder 4, **dadurch gekennzeichnet, dass** der rohrförmige Umleitungsabschnitt (44) einen Durchmesser aufweist, der im Wesentlichen dem Mittelwert der Durchmesser des Gehäuses (12) und des Flammrohrs (22) entspricht.

6. Brennkammer nach einem der vorhergehenden Ansprüche, **dadurch gekennzeichnet, dass** sie einen Durchgang zur Zirkulation von Luft (48) zwischen dem Umleitungsabschnitt (44) und dem Gehäuse (12) und einen anderen Durchgang zur Zirkulation von Luft (50) zwischen dem Umleitungsabschnitt und dem Flammrohr beinhaltet, wobei die zwei Durchgänge durch einen Verbindungsdurchgang (51) verbunden sind.

7. Brennkammer nach dem vorhergehenden Anspruch, **dadurch gekennzeichnet, dass** die radiale Höhe der Zirkulationsdurchgänge (48, 50) identisch ist.

8. Turbine, im Besonderen eine Turbine mit thermodynamischem Zyklus und einem Rekuperator, für die Erzeugung von Energie, insbesondere von elektrischer Energie, die mindestens eine Verdichtungsstufe mit mindestens einem Gasverdichter, einen Wärmetauscher, eine Brennkammer und mindestens eine Entspannungsstufe mit mindestens einer Entspannungsturbine, die durch eine Welle mit dem Verdichter verbunden ist, beinhaltet, **dadurch gekennzeichnet, dass** sie eine Brennkammer (10) nach einem der vorhergehenden Ansprüche beinhaltet.

## Claims

1. Combustion chamber (10) of a turbine, particularly a turbine having a thermodynamic cycle with recuperator, for producing energy, particularly electrical energy, comprising a housing (12) with a means (52) of injecting at least one fuel and a hot compressed air intake (32), the said housing housing a flame tube (22) with a perforated diffuser (26) for the passage of the hot compressed air and of the fuel, and a flame stabilizer (54), the flame tube (22) being closed at one end by a diffusion partition (26), the chamber comprising an air deflector (34) positioned facing the compressed hot air intake (32) in order to cause this hot air to circulate in just one axial direction starting from this intake, **characterized in that** the flame stabilizer (54) comprises the perforated diffuser (56) housed in the diffusion partition (26) and comprising a multitude of axial holes (58) evenly circumferentially distributed on a base and a central axial orifice (60) through which the injection means (52) injects the fuel, the injection means (52) facing the flame stabilizer (54), the base continuing in the axial direction and away from the diffusion partition in the form of axial arms (62) and bearing at their ends a mixing tube (64) of limited axial extent and of an outside diameter smaller than the inside diameter of the flame tube (22).

2. Combustion chamber according to Claim 1, **characterized in that** the air deflector (34) comprises a tube (36) positioned between the housing (12) and the flame tube (22).

3. Combustion chamber according to Claim 2, **characterized in that** the tube (36) comprises a tubular fixing portion (42) and a tubular air-deflecting portion (44), of different cross sections, connected to one another by a joining portion (46).

4. Combustion chamber according to Claim 3, **characterized in that** the tubular fixing portion (42) has a diameter substantially equal to the diameter of the housing (12) and **in that** the tubular deflecting portion (44) has a diameter which is greater than the diameter of the flame tube (22) and smaller than that of the diameter of the housing (12).

5. Combustion chamber according to Claim 3 or 4, **characterized in that** the tubular deflecting portion (44) has a diameter which is substantially the mean of the diameters of the housing (12) and of the flame tube (22).

6. Combustion chamber according to one of the preceding claims, **characterized in that** it comprises an air circulation passage (48) between the deflecting portion (44) and the housing (12) and another air circulation passage (50) between the said deflecting portion and the flame tube, the two passages being connected by a connecting passage (51).

7. Combustion chamber according to the preceding claim, **characterized in that** the radial height of the circulation passages (48, 50) is identical.

8. Turbine, particularly a turbine having a thermodynamic cycle with a recuperator, for producing energy, particularly electrical energy, comprising at least one compression stage with at least one gas compressor, a heat exchanger, a combustion chamber, and at least one expansion stage with at least one expansion turbine connected by a shaft to the compressor, **characterized in that** it comprises a combustion chamber (10) according to one of the preceding claims.
